Europäisches Patentamt

European Patent Office

Office européen des brevets

(19)

(11) Publication number: **0 109 021**
**B1**

(12) **EUROPEAN PATENT SPECIFICATION**

(45) Date of publication of patent specification: **03.02.88**

(51) Int. Cl.⁴: **B 60 R 22/34, B 60 R 22/36**

(21) Application number: **83111092.9**

(22) Date of filing: **07.11.83**

(54) **Retractor reel for a vehicle safety belt.**

(30) Priority: **09.11.82 SE 8206364**

(43) Date of publication of application:
**23.05.84 Bulletin 84/21**

(45) Publication of the grant of the patent:
**03.02.88 Bulletin 88/05**

(84) Designated Contracting States:
**DE FR GB IT**

(56) References cited:
**DE-A-2 557 460**
**DE-A-2 610 870**
**DE-A-2 662 241**
**DE-A-2 754 155**
**FR-A-2 463 628**
**GB-A-1 351 642**
**US-A-2 953 315**
**US-A-3 430 885**

(73) Proprietor: **AUTOLIV DEVELOPMENT AKTIEBOLAG**
**P.O. Box 124**
**S-447 00 Vargarda (SE)**

(72) Inventor: **Andersson, Tommy**
**Fyrmastarvagen 15**
**S-441 50 Alingsas (SE)**

(74) Representative: **Frankland, Nigel Howard et al**
**FORRESTER & BOEHMERT Widenmayerstrasse 4/I**
**D-8000 München 22 (DE)**

EP 0 109 021 B1

## Description

The present invention relates to a retractor reel for a vehicle safety belt, and more particularly to a retractor reel for a vehicle safety belt adapted to be used in a motor car.

Many different retractor reels have been proposed previously for use with vehicle safety belts mounted in motor cars. In a typical prior proposed device the safety belt is automatically wound onto a shaft when the belt is not in use. The shaft which is rotatably supported by appropriate bearings. Usually such a device incorporates a locking arrangement which prevents the belt being withdrawn from the reel under certain circumstances, for example when the vehicle is subjected to a sudden deceleration, and/or when the belt is subjected to a force tending to withdraw the belt rapidly from the reel.

It has been proposed previously to utilise locking pins to effect the appropriate locking of the rotatable shaft in such a retractor reel. For example, US—A—3,430,885 discloses an arrangement in which a plurality of locking pins are provided, which are arranged to extend radially of the rotatable shaft. The pins are kept in a retracted non-locking position by means of a permanent magnet located in the centre of the shaft. The locking pins are movable in a radial direction, and are thus adapted to be moved to an extended or locking position by the centrifugal force experienced by the pins when the belt is rapidly withdrawn from the reel. It will be appreciated that this locking mechanism is only actuated when the belt is rapidly withdrawn, and is, thus, only "belt sensitive". The mechanism is not "vehicle sensitive" in that locking is not effected as a direct consequence of the vehicle being subjected to rapid deceleration. This is clearly a disadvantage. Also, in the embodiment described in US—A—3,430,885, the described shaft is difficult to manufacture.

U.S.—A Patent Specification No. 2,953,315 describes a retractor reel having two pins which are located in alignment, one on each side of the axis of a shaft, and which can move radially relative to the shaft. The pins are adapted to be moved as a consequence of relative movement between the rotatable shaft and an inertia body which is rotatably mounted on the shaft. The pins are held against a recess defined between two raised areas on a face of one flange of the reel, and are guided in channels in an inertia lock plate. The lock plate must be held very firmly in position, since if the inertia lock plate moves axially the reel will fail. This mechanism is only "belt sensitive" but can be adapted so as to provide a locking effect in response to deceleration of a vehicle, i.e. so that the locking mechanism is "vehicle sensitive" as well as "belt sensitive". However, this mechanism is very complicated to manufacture.

The locking mechanisms described in the above mentioned Patent Specifications all have a complicated shaft design because the force that may be exerted on a vehicle safety belt when the reel is locked under emergency conditions may be very high, and this force has to be transferred from the belt of the safety belt to the locking means through the shaft. Thus the shaft must be able to withstand the appropriate force without failing.

The problem of transferring the force from the belt to the locking means can be solved in a relatively easy way by providing a separate locking means capable of engaging one or two notched wheels attached to one or both ends of the shaft. However, if this solution is adopted other problems arise, for example the problem of providing a reliable control of separate locking means which engage two notched wheels.

The present invention seeks to provide a simple yet strong and reliable locking mechanism not suffering from the complications and potential weaknesses of US—A—2953315.

With respect to this latter prior art document in which there is provided a retractor reel for a vehicle safety belt comprising a shaft rotatably mounted on a support adapted automatically to wind in a safety belt when the belt is not in use and incorporating means for locking the shaft to prevent the belt being withdrawn from the retractor reel under certain conditions, said locking means comprising stop abutment means on said support and at least one locking pin which extends substantially diametrically relative to the axis of the shaft, substantially perpendicularly to the longitudinal axis of the shaft, the locking pin being axially movable between a retracted position and an extended locking position, the locking pin, when in the locking position, having an engagement end extending radially outwardly relative to the shaft on one side thereof to cooperate with a stop abutment means provided on the support to prevent rotation of the shaft, the present invention is characterized in that said pin or pins each extend through an aperture formed in the shaft so that when each pin is in the locking position, the end of the or each pin opposed to said engagement end engages the shaft on the other side of the axis of the shaft that is remote from the engagement end of the locking pin, there being a control disk rotatably mounted on the shaft for controlling movement of the locking pin or pins the control disc engaging the pin or pins to effect movement of the pins on the occurrence of relative rotational movement between the central disk and the shaft.

Preferably two substantially parallel locking pins are provided, both displaceably mounted in the shaft extending perpendicularly to the axis of the shaft, the pins being displaceable in opposite directions.

Conveniently the two locking pins are located in a common plane that is perpendicular to the axis of the shaft.

Advantageously the locking pins are arranged such that the locking pins substantially abut each other when in their locking positions.

Preferably said stop abutment means consists of a ring of protruding stop elements, concentric with the shaft, the arrangement being such that when the or each locking pin is in the locking position, the end of the locking pin remote from the engagement end is substantially midway between the surface of the shaft and the said ring of stop elements.

Conveniently the shaft is tubular and is moulded into a covering of appropriate material, the or each locking pin passing through an aperture formed in the tube, there being covering material between the or each locking pin and the tube.

Preferably the said covering is formed of a plastics material, and surrounds the tube and completely fills the tube.

Advantageously there are two locking pins with intermediate layer of plastics material located between them.

Conveniently the or each locking pin is provided with means arranged to cooperate with a guide slot on the control disk to effect movement of the pins on the occurrence of relative movement between the control disk and the shaft.

Preferably the control disk is or is associated with an inertia member so that, on rapid withdrawal of the belt, there is a relative movement between the control disk and the shaft.

Advantageously deceleration sensitive means are provided to prevent rotation of the control disk when a deceleration above a predetermined deceleration is exerted on the retractor reel.

In order that the invention may be more readily understood, and so that further features thereof may be appreciated, the invention will now be described by way of example with reference to the accompanying drawings in which:

Figure 1 is a perspective view of a safety belt retractor reel in accordance with the invention, with the cover removed to illustrate the working parts of the reel;

Figure 2 is a view corresponding to Figure 1 with various components removed to illustrate more clearly the locking pins; and

Figure 3 is a cross-sectional view through the shaft of the retractor reel of Figures 1 and 2 showing the locking pins.

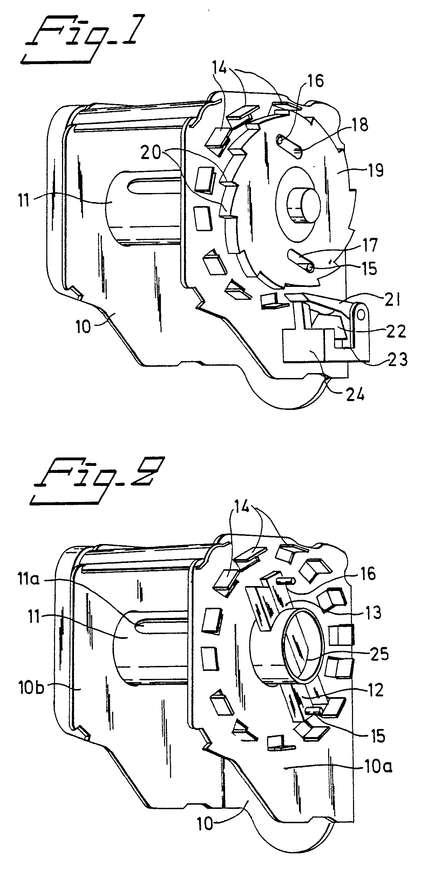

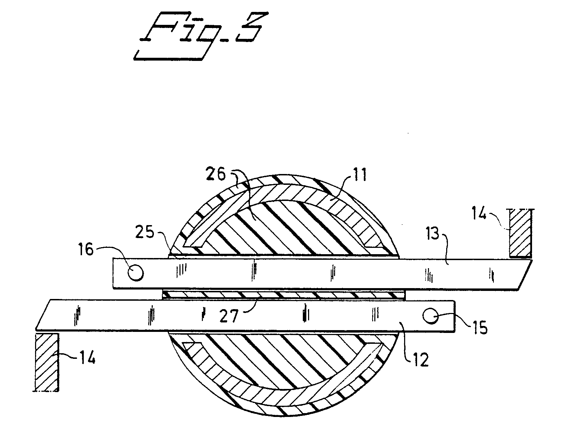

Figures 1 and 2 are corresponding perspective views of a retractor reel in accordance with the invention. It is to be understood that such a retractor reel would normally be provided with a cover to prevent external objects contacting the moving parts of the reel, so that free operation of the movable parts of the reel is not prevented or hindered in any way.

The reel assembly comprises a support 10 which is adapted to be mounted on a car body. The support 10 includes a substantially planar plate having two forwardly extending parallel flanges 10a, 10b (Figure 2). The flanges are parallel and are of substantially the same shape. A rotatable shaft 11 extends between the flanges and is rotatably supported on the flanges. An aperture 11a is provided extending through the shaft 11 to facilitate the attachment of one end of the safety belt to the shaft. The safety belt may be wound onto the shaft.

One end of the shaft extends beyond the flange 10a and is provided with a device for locking the shaft to prevent rotation of the shaft relative to the support 10, thus preventing extraction of the safety belt from the reel.

The shaft is provided with a helical spring (not shown) for automatic retraction and coiling of the belt when the safety belt is not in use. The helical spring is provided at the end of the shaft opposite to the locking device.

The locking device comprises various components including two locking pins 12, 13. The locking pins extend, parallel with each other, substantially diametrically through the shaft 11. The structure of the shaft and the way in which the pins are located in the shaft will be described hereinafter in greater detail. The pins are adapted to move in opposite directions to a protruding position in which they can engage with fixed stop abutment means 14 constituted by a circular array of detents securely mounted on the flange 10a of the support 10. The array of detents 14 is coaxial with the axis of the shaft 11. When the locking pins 12, 13 engage the detents 14 the shaft 11 is prevented from further rotation.

Each locking pin 12, 13 is provided with a respective guide pin 15, 16, constituted by a pin extending from one end of the locking pin in a direction parallel to the axis of the shaft 11. A control disc 19 is provided which is rotatably mounted on the shaft 11 adjacent the locking pins 12, 13. Guide grooves 17, 18, the sidewalls of which form guide surfaces to engage the guide pins, are provided in the control disk and the arrangement is such that each of the guide pins 15, 16 is accommodated within a respective guide grooves 17, 18. The guide grooves are of arcuate form the inner end of each guide groove being closer to the axis of the shaft 11 than is the outer end of each guide groove.

The control disk 19 is connected to the shaft 11 by means of a helical spring (not shown) so that, under normal circumstances when the shaft is only rotated slowly, the control disk 19 can move substantially in synchronism with the shaft.

It is to be understood that the guide grooves 17, 18 of the control disk 19 are so positioned and have such a length and shape that when the control disk is turned relative to the shaft a force is applied to the guide pins 15, 16 and the locking pins 12, 13 can thus be moved from a retracted position in which the locking pins do not engage with the stop means 14, to a protruding locking position in which one end of each of the locking pins is in engagement with a corresponding snap means 14.

The locking pins 12, 13 are illustrated in the retracted or non-locking position in Figure 2. In this position the centres of gravity of the locking pins are close to the centre of the shaft, so that the pins are, at the worst, only slightly influenced by centrifugal force during rotation of the shaft.

The control disk 19 is provided with a plurality of teeth 20 spaced around the circumference of the disk. A tiltable lever 21 is provided located adjacent the periphery of the control disk 19. The lever 21 can move from a position in which it does not engage the teeth of the locking disk 19, to a position in which there is engagement.

The lever 21 is mounted on a shaft which is attached to a support just outside the circumference of the control disk. A tiltable inertia member 22 is provided which stands on a base plate 23 which forms part of a housing 24. A protrusion provided on the undersurface of the lever 21, substantially at the mid-point thereof, engages on top of the tiltable inertia member 22. The inertia member 22 is arranged to topple when the vehicle is subjected to rapid acceleration or deceleration. The consequence of this toppling of the inertia member 22 is that the lever 21 is tilted upwardly and one end of the lever is brought into engagement with the teeth 20 provided at the periphery of the control disk 19. Further rotation of the control disk 19 is then prevented which will, as is explained hereinafter, prevent the further extraction of the safety belt from the retractor reel. A tiltable member of this general type is described in British Patent Specification No. 1,351,642.

Referring now to Figures 2 and 3 it will be appreciated that in the illustrated embodiment the shaft 11 is shown as being a tube and the locking pins are mounted in a through bore 25 which extends diametrically through the shaft perpendicular to the axis of the shaft. The pins are positioned adjacent to each other in a plane that is perpendicular to the axis of the shaft and both pins have such a length that their ends extend beyond the periphery of the shaft on either side of the shaft. The length of the locking pins is such that when the locking pins are in the retracted position illustrated in Figure 2 the locking pins do not engage the stop means 14 and thus do not prevent rotation of the shaft. However, when the locking pins are moved from the retracted or non-locking position one end of each of the locking pins will engage a stop means 14 thus preventing further rotation of the shaft as shown in Figure 3. It is to be noted that when the pins in the locking position the ends of the locking pins provided with the guide means 15, 16 still protrude beyond the periphery of the shaft 11, and are located midway between the periphery of the shaft and the circular array of detents 14. Thus the locking pins, when in the locking position, still engage the tube in a region on the side of the axis of the tube that is remote from the end of the locking pin engaging the stop means.

In the embodiment shown in Figure 3 the shaft 11 is a tubular metal element provided with a moulded covering 26 of the plastics material that covers the exterior surface of the shaft and also fills up the space within the tubular shaft. Thus the envelope surface of the shaft has the desired circular cross section. A thin layer 27 of the plastics material may be provided between the two locking pins 15, 16 facilitating movement of the locking pins. The plastics materials is also located between the locking pins and the tubular metal element.

The described retractor reel can be made "belt sensitive" if the control disk 19 is constituted as an inertia member or is supplemented by an inertia member. An inertia member is a body having a comparatively large mass which is rotatably mounted on the shaft 11 and is connected to the shaft by an appropriate spring so that when the safety belt is extracted rapidly from the retractor reel the shaft 11 will rotate relative to the control disk and/or inertia member. If the belt is extracted slowly, however, the shaft and inertia member will move together.

The above described locking device operates as follows. When a person wishes to utilise a safety belt connected to the retractor reel the person can withdraw the safety belt from the reel by pulling gently on the safety belt. Provided that the safety belt is withdrawn from the reel at a relatively slow rate the locking disk 19 will move in synchronism with the shaft 11, and the locking pins 12, 13 will remain in the initial retracted position.

Should the vehicle in which the safety belt is fitted be involved in an accident it is most likely that the vehicle will decelerate rapidly, or will be thrown side ways. In either event the tiltable member 22 will tilt, thus causing the lever 21 to move to a position in which one end of the lever engages a tooth 20 provided at the periphery of the locking disk 19. The disk 19 is thus prevented from rotating in a direction corresponding to withdrawal of the safety belt. If the person wearing the seat belt moves forwardly, thus tending to withdraw the seat belt from the retractor reel, the shaft 11 will begin to rotate. As the shaft 11 begins to rotate the locking pins 12, 13 will also rotate, since they extend diametrically across the shaft and the guide pins 15, 16 will move along the guide slots 17, 18 as a consequence of the design of the slots, since the disk 19 is stationary. The locking pins are then moved to a locking or projecting position and the ends of the locking pins 12, 13 will engage the stop means 14, thus preventing further rotation of the shaft 11.

If the control disk 19 is in the form of, or is supplemented by, an inertia member, if there is a sudden withdrawal of the belt, even if the tiltable member 22 has not tilted, the retractor reel will still enter a locked condition. The reason for this is that, if the belt is withdrawn rapidly the shaft 11 will rotate relatively rapidly, but the inertia member will not rotate as rapidly as the shaft 11. There will thus be a relative movement between the shaft 11 and the control disk 19 and again the arrangement of the guide slots 17, 18 is such that, under such circumstances the locking pins 12, 13 are moved to the locking position.

It will be appreciated, therefore, that the described preferred embodiment of the invention is both "belt sensitive" and "vehicle sensitive" and the device will operate to prevent the safety belt being withdrawn from the retractor reel under accident conditions.

Under very heavy braking of the vehicle, for example under collision conditions, a very large force may be applied to the shaft, and that force will be transferred to the locking pins. Under such circumstances it is conceivable that the layer of plastics material between the locking pins may be deformed. Also the layer of plastics material between the locking pins and the metal portion of the shaft may become deformed so that the locking pins will directly abut the metal tube that forms the core of the shaft. In this case the locking pins will cooperate with each other and with the tube to accommodate the force that must be transferred to the stop means. Since the locking pins will cooperate with each other under such circumstances it is possible for the locking pins each to have a relatively small cross sectional area. Thus the locking pins may be made relatively thin and have only a low weight which facilitates a reliable operation of the locking pins.

Whilst only one embodiment of a locking device in accordance with the invention has been shown in the drawings and described, it will be appreciated that modifications may be effected within the scope of the invention. Thus, whilst the locking pins have been illustrated as having a square or rectangular cross section, the locking pins may be made of circular cross section. Whilst the shaft and the locking pins have been described as being made of metal, they may be made of any other material having sufficient strength. Whilst the connection between the control disk and the locking pins has been described as being constituted by guide pins and guide slots it is to be appreciated that any appropriate protrusion or abutment engage correspondingly appropriate guiding surface provided on the control disk may be utilised. Furthermore, the locking pins can be positioned in a single plane that is perpendicular to the axis of the shaft, or can be located adjacent each other in parallel planes. One, two or more locking pins can be used. It is not essential that the shaft is surrounded by a covering of plastics material, but it is preferable that at least the locking pin or locking pins are mounted in a layer of plastics material or some other material having a low coefficient of friction, so that the pins can be moved easily. The shaft need not necessarily be of tubular construction. However, this is an advantage because a shaft of tubular construction will have a lower weight than a solid shaft. Whilst one particular type of stop means has been illustrated, various items can constitute the necessary means.

The features disclosed in the foregoing description, in the following claims and/or in the accompanying drawings may, both separately and in any combination thereof, be material for realising the invention in diverse forms thereof.

**Claims**

1. A retractor reel for a vehicle safety belt comprising a shaft (11) rotatably mounted on a support (10) adapted automatically to wind in a safety belt when the belt is not in use and incorporating means for locking the shaft to prevent the belt being withdrawn from the retractor reel under certain conditions, said locking means comprising stop abutment means (14) on said support (10) and at least one locking pin (12, 13) which extends substantially diametrically relative to the axis of the shaft (11), substantially perpendicularly to the longitudinal axis of the shaft, the locking pin being axially movable between a retracted position and an extended locking position, the locking pin, when in the locking position, having an engagement end extending radially outwardly relative to the shaft on one side thereof to cooperate with a stop abutment means (14) provided on the support to prevent rotation of the shaft, characterised in that said pin or pins (12, 13) each extend through an aperture (25) formed in the shaft so that when each pin (12, 13) is in the locking position, the end of the or each pin opposed to said engagement end engages the shaft on the other side of the axis of the shaft that is remote from the engagement end of the locking pin, there being a control disk (19) rotatably mounted on the shaft (11) for controlling movement of the locking pin or pins (12, 13) the control disk engaging the pin or pins to effect movement of the pins on the occurrence of relative rotational movement between the control disk and the shaft.

2. A retractor reel according to claim 1 wherein two substantially parallel locking pins (12, 13) are provided, both displaceably mounted in the shaft (11) extending perpendicularly to the axis of the shaft, the pins being displaceable in opposite directions.

3. A retractor reel according to claim 2, wherein the two locking pins (12, 13) are located in a common plane that is perpendicular to the axis of the shaft.

4. A retractor reel according to claim 3, wherein the locking pins (12, 13) are arranged such that the locking pins substantially abut each other when in their locking positions.

5. A retractor reel according to any one of the preceding claims in which said stop abutment means (14) consists of a ring of protruding stop elements, concentric with the shaft, the arrangement being such that when the or each locking pin (12, 13) is in the locking position, the end of the locking pin remote from the engagement end is substantially midway between the surface of the shaft and the said ring of stop elements.

6. A retractor reel according to any one of the preceding claims, wherein the shaft (11) is tubular and is moulded into a covering (26) of appropriate material, the or each locking pin passing through an aperture (25) formed in the tube, there being covering material between the or each locking pin and the tube.

7. A retractor reel according to claim 6, wherein the said covering (26) is formed of a plastics material, and surrounds the tube and completely fills the tube.

8. A retractor reel according to claim 7, wherein there are two locking pins (12, 13) with intermediate layer (27) of plastics material located between them.

9. A retractor reel according to any one of the preceding claims, wherein the or each locking pin is provided with means (15, 16) arranged to cooperate with a guide slot (17, 18) on the control disk (19) to effect movement of the pins on the occurrence of relative movement between the control disk and the shaft.

10. A retractor reel according to any one of the preceding claims, wherein the control disk (19) is or is associated with an inertia member so that, on rapid withdrawal of the belt, there is a relative movement between the control disk and the shaft.

11. A retractor reel according to any one of the preceding claims, wherein deceleration sensitive means (21—24) are provided to prevent rotation of the control disk (19) when a deceleration above a predetermined deceleration is exerted on the retractor reel.

## Patentansprüche

1. Einziehrolle für einen Fahrzeugsicherheitsgurt, mit einer drehbaren, auf einem Träger (10) gelagerten Welle, die zum automatischen Aufwickeln eines Sicherheitsgurtes bei dem Nichtverwenden eingerichtet ist, und mit Mitteln zum Verriegeln der Welle zum Verhindern eines Abziehens des Gurtes von der Einziehrolle unter bestimmten Bedingungen, wobei die Verriegelungsmittel Stopanschläge (14) auf dem Träger (10) und wenigstens einen Verriegelungsstift (12, 13) aufweisen, der sich im wesentlichen diametral relativ zu der Achse der Wellen (11) im wesentlichen senkrecht zu der Längsachse der Welle erstreckt, und der axial beweglich ist zwischen einer eingezogenen Position und einer ausgeschobenen Verriegelungsposition, wobei der Verriegelungsstift in der Verriegelungsposition in Eingriff steht und sich radial nach außen relativ zu der Welle von einer deren Seite erstreckt, um mit den Stopanschlägen (14), die an dem Träger (10) zur Verhinderung einer Drehung der Welle angebracht sind, zusammenzuwirken, dadurch gekennzeichnet, daß der Stift oder die Stifte (12, 13) sich jeweils durch eine in der Welle gebildete Öffnung (25) erstrecken, so daß dann, wenn die Stifte (12, 13) in der Verriegelungsposition sind, das Ende des bzw. der Stifte, das dem Eingriffsende gegenüberliegt, mit der Welle auf der anderen Seite der Achse der Welle, die dem Eingriffsende des Verriegelungsstiftes gegenüberliegt, in Eingriff ist, wobei eine drehbar auf der Welle (11) gelagerte Steuerscheibe (19) zur Steuerung der Bewegung des bzw. der Verriegelungsstifte vorgesehen ist, die mit dem bzw. den Stiften in Eingriff stehen, um eine Bewegung der Stifte bei dem Auftreten eine relative Drehbewegung zwischen Steuerscheibe und Welle zu bewirken.

2. Einziehrolle nach Anspruch 1, wobei zwei im wesentlichen parallele Verschlußstifte (12, 13) vorgesehen sind, die jeweils versetzbar in der Welle (11) senkrecht zu deren Achse befestigt sind, wobei die Stifte in entgegengesetzter Richtung versetzbar sind.

3. Einziehrolle nach Anspruch 2, wobei die beiden Verriegelungsstifte (12, 13) in einer gemeinsamen Ebene, die senkrecht zu der Achse der Welle verläuft, angeordnet sind.

4. Einziehrolle nach Anspruch 3, wobei die Verschlußstifte (12, 13) derart angeordnet sind, daß die Verschlußstifte im wesentlichen gegeneinanderstoßen, wenn sie in ihrer Verriegelungsposition sind.

5. Einziehrolle nach einem der vorangehenden Ansprüche, wobei die Stopanschläge (14) aus einem Ring aus vorstehenden Stopelementen bestehen, die mit der Welle konzentrisch sind, wobei die Anordnung derart ist, daß dann, wenn der oder die Verschlußstifte (12, 13) in ihrer Verschlußstellung sind, das von dem Eingriffsende entfernte Enden der Verschlußstifte im wesentlichen mittig zwischen der Oberfläche der Welle und dem Ring von Stopelementen ist.

6. Einziehrolle nach einem der vorangehenden Ansprüche, wobei die Welle (11) ringförmig und in einer Abdeckung (26) aus einem geeigneten Material gebettet ist, wobei der bzw. die Verschlußstifte durch eine Öffnung (25), die in dem Rohr ausgebildet ist, dringen, wobei ein Abdeckungsmaterial zwischen dem bzw. den Verschlußstiften und dem Rohr vorhanden ist.

7. Einziehrolle nach Anspruch 6, wobei die Abdeckung (26) aus einem Kunststoff gebildet ist, das Rohr umgibt und vollständig füllt.

8. Einziehrolle nach Anspruch 7, wobei zwei Verschlußstifte (12, 13) mit einer Zwischenschicht (27) aus einem Kunststoffmaterial zwischen ihnen vorhanden sind.

9. Einziehrolle nach einem der vorangehenden Ansprüche, wobei der bzw. die Stifte mit Mitteln (15, 16) vorgesehen sind, die zum Zusammenwirken mit einem Führungsschlitz (17, 18) auf der Steuerplatte (19) angeordnet sind, um eine Bewegung der Stifte bei dem Auftreten einer Relativbewegung zwischen der Steuerscheibe und der Welle zu bewirken.

10. Einziehrolle nach einem der vorangehenden Ansprüche, wobei die Steuerscheibe (19) ein Trägheitselement bildet oder mit einem Trägheitselement versehen ist, so daß bei einem schnellen Abziehen des Gurtes eine Relativbewegung zwischen der Steuerscheibe und der Welle auftritt.

11. Einziehrolle nach einem der vorangehenden Ansprüche, wobei auf eine Entschleunigung ansprechende Mittel (21—24) vorgesehen sind, um eine Drehung der Steuerscheibe (19) zu verhindern, wenn eine einen vorgegebenen Wert übersteigende Entschleunigung auf die Einziehrolle ausgeübt wird.

## Revendications

1. Enrouleur pour ceinture de sécurité de véhicule, présentant un arbre (11) monté rotatif sur un support (10), destiné à enrouler automatiquement une ceinture de sécurité lorsque cette ceinture n'est pas en service, et comportant des moyens pour verrouiller l'arbre de façon à empêcher que la ceinture soit extraite de l'enrouleur dans certaines conditions, lesdits moyens de verrouillage comprenant des moyens de butée (14) situés sur ledit support (10) et au moins une broche de verrouillage (12, 13) qui s'étend sensiblement dans le sens diamétral par rapport à l'axe de l'arbre (11), sensiblement perpendiculairement à l'axe longitudinal de cet arbre, la broche de verrouillage étant mobile axialement entre une position rétractée et une position sortie de verrouillage, la broche de verrouillage, lorsqu'elle occupe la position de verrouillage, possédant une extrémité de venue en prise qui s'étend radialement vers l'extérieur par rapport à l'arbre, sur l'un des côtés de ce dernier, afin de coopérer avec un moyen de butée (14) prévu sur le support, en vue d'interdire une rotation de l'arbre, caractérisé par le fait que ladite ou lesdites broche(s) (12, 13) traversent chacune une ouverture (25) pratiquée dans l'arbre, de telle sorte que, lorsque chaque broche (12, 13) occupe la position de verrouillage, l'extrémité de la ou de chaque broche opposée à ladite extrémité de venue en prise vienne coopérer avec l'arbre, de l'autre côté de l'axe de cet arbre qui est éloigné de l'extrémité de venue en prise de la broche de verrouillage, un disque de commande (19) étant calé à rotation sur l'arbre (11) pour commander le mouvement de la ou des broche(s) de verrouillage (12, 13), ce disque de commande venant en prise avec la ou les broche(s) pour provoquer un mouvement de ces broches en cas de mouvement rotatoire relatif du disque de commande et de l'arbre.

2. Enrouleur selon la revendication 1, dans lequel deux broches de verrouillage (12, 13) sensiblement parallèles sont prévues, l'une et l'autre étant montées mobiles dans l'arbre (11) et s'étendant perpendiculairement à l'axe de cet arbre, les broches étant mobiles dans des directions opposées.

3. Enrouleur selon la revendication 2, dans lequel les deux broches de verrouillage (12, 13) se trouvent dans un plan commun qui est perpendiculaire à l'axe de l'arbre.

4. Enrouleur selon la revendication 3, dans lequel les broches de verrouillage (12, 13) sont agencées de manière que ces broches de verrouillage butent sensiblement l'une contre l'autre lorsqu'elles occupent leurs positions de verrouillage.

5. Enrouleur selon l'une quelconque des revendications précédentes, dans lequel lesdits moyens de butée (14) consistent en un anneau d'éléments d'arrêt saillants concentriques à l'arbre, l'agencement étant tel que, lorsque la ou chaque broche de verrouillage (12, 13) occupe la position de verrouillage, l'extrémité de cette broche de verrouillage éloignée de l'extrémité de venue en prise se trouve, sensiblement, à mi-distance entre la surface de l'arbre et ledit anneau d'éléments d'arrêt.

6. Enrouleur selon l'une quelconque des revendications précédentes, dans lequel l'arbre (11) est tubulaire et est moulé en une structure de recouvrement (26) en un matériau approprié, la ou chaque broche de verrouillage traversant une ouverture (25) pratiquée dans le tube, du matériau de recouvrement se trouvant entre la ou chaque broche de verrouillage et le tube.

7. Enrouleur selon la revendication 6, dans lequel ladite structure de recouvrement (26) consiste en une matière plastique, entoure le tube et comble intégralement ce dernier.

8. Enrouleur selon la revendication 7, dans lequel sont prévues deux broches de verrouillage (12, 13), entre lesquelles est interposée une couche intercalaire (27) en matière plastique.

9. Enrouleur selon l'une quelconque des revendications précédentes, dans lequel la ou chaque broche de verrouillage est pourvue de moyens (15, 16) conçus pour coopérer avec une boutonnière de guidage (17, 18) sur le disque de commande (19), de manière à provoquer un mouvement des broches en cas de mouvement relatif du disque de commande et de l'arbre.

10. Enrouleur selon l'une quelconque des revendications précédentes, dans lequel le disque de commande (19) est ou est associé à un organe d'inertie, de telle sorte que, lors d'une extraction rapide de la ceinture, il se produise un mouvement relatif du disque de commande et de l'arbre.

11. Enrouleur selon l'une quelconque des revendications précédentes, dans lequel des moyens (21—24) détectant une décélération sont prévus pour empêcher une rotation du disque de commande (19) lorsqu'une décélération, excédant une décélération prédéterminée, est imposée à l'enrouleur.

Fig.1

Fig.2

## Fig. 3